# EUROPÄISCHE PATENTSCHRIFT

(11) **EP 1 580 121 B1**
(45) Veröffentlichungstag und Bekanntmachung des Hinweises auf die Patenterteilung: **15.05.2013**
(21) Anmeldenummer: 05005410.5
(22) Anmeldetag: 11.03.2005
(51) Int. Cl.: B64C 1/20, B64D 9/00

(54) **Tragrolle und deren Verwendung**
Cargo roller and its use
Rouleau pour fret et son utilisation

(30) Priorität: 22.03.2004 DE 102004013909; 25.03.2004 DE 102004014745
(43) Veröffentlichungstag der Anmeldung: 28.09.2005
(73) Patentinhaber: Telair International GmbH, 83714 Miesbach (DE)
(72) Erfinder: Huber, Thomas, 83727 Schliersee (DE); Holzner, Richard, 83026 Rosenheim (DE)
(74) Vertreter: Bohnenberger, Johannes

(56) Entgegenhaltungen:
- EP-A- 0 366 223
- EP-A- 1 120 366
- EP-A1- 0 563 537
- US-A- 3 337 066
- US-A1- 2003 057 326

## Beschreibung

Die Erfindung betrifft eine Tragrolle nach dem Oberbegriff des Patentanspruches 1 sowie deren Verwendung.

Aus der DE 2908400 A1, die den nächstliegenden Stand der Technik und den Oberbegriff des Anspruchs 1 offenbart, ist eine Anordnung für einen Frachtraumboden eines (Großraum-) Flugzeugs bekannt, bei welchem insgesamt sechs Reihen von Montageprofilen in Längsrichtung des Flugzeugs montiert sind. In den Montageprofilen sind Tragrollen und auch Riegelelemente montiert. Die Anordnung der Montageprofile ist derart, dass zwei Container nebeneinander Platz finden und dabei randseitig sowie mittig auf den Tragrollen sitzen. Zum Verriegeln der Container in einer Richtung quer zur Flugzeuglängsachse sind zwischen den mittleren Montageprofilen entsprechende Riegelelemente vorgesehen.

Bei dieser Anordnung wird es als nachteilig angesehen, dass die Tragrollen eines jeden Montageprofils jeweils nur von einer Reihe (in Flugzeuglängsrichtung) von Containern oder Paletten benutzt werden kann, für die nächste Reihe von Containern, Paletten oder dergleichen Frachtstücken wird ein gesondertes Montageprofil mit darin montierten Tragrollen benötigt.

Der Erfindung liegt die Aufgabe zu Grunde, eine Tragrolle der eingangs genannten Art dahin gehend weiterzubilden, dass eine vielseitigere Verwendbarkeit bei geringem Bauaufwand sichergestellt wird.

Diese Aufgabe wird durch eine Tragrolle nach Patentanspruch 1 gelöst. Die Aufgabe wird durch eine Tragrolle zur Anbringung in einem Montageprofil eines Frachtraumbodens eines Flugzeug-Laderaums, wobei das Montageprofil Seitenwände aufweist und in einem Innenraum des Montageprofils Riegelelemente zum Sichern von Containern, Paletten oder dergleichen Frachtstücken montierbar sind, dadurch gelöst, dass an einer durch die Seitenwände des Montageprofils hindurchgeführten Achse zwei Außenrollen außerhalb des Innenraums des Montageprofils drehbar montiert sind. Durch diese Anordnung ist es möglich, mittels eines einzigen Montageprofils zwei Reihen (in Flugzeuglängsrichtung) von Tragrollen zu montieren.

Vorzugsweise ist auf der Achse im Innenraum des Montageprofils eine (weitere) Innenrolle montiert. Dadurch wird eine verbesserte Abstützung eines Containers dann erreicht, wenn er nicht nur mit seiner Randzone über eine der beiden Außenrollen, sondern mit seinem gesamten Boden über beide Außenrollen und die Innenrolle fährt.

Vorzugsweise sind die Außenrollen jeweils in einem Tragekäfig montiert, der einerseits an der zugehörigen Seitenwand des Montageprofils befestigt ist und andererseits eine Außenwand aufweist, in welcher die Achse mit einem Endabschnitt unter Abstützung befestigt ist. Trotz des geringen Mehraufwandes für die Montage der Außenrollen ergibt sich eine erheblich erhöhte Festigkeit der Gesamtanordnung, wobei das Trageprofil im Wesentlichen frei von Biegemomenten gehalten werden kann.

Der Tragekäfig weist vorzugsweise eine obere Fläche mit einer mittigen Ausnehmung auf, durch welche die Außenrolle hervorragt. Dadurch wird insgesamt ein verbesserter Schutz gegenüber Beschädigung erreicht.

Die obere Fläche ist vorzugsweise zur Außenrolle hin ansteigend geneigt ausgebildet, so dass beim Anfahren eines Containers sichergestellt ist, dass dieser auf die Rolle auffährt. Weiterhin weist die obere Fläche des Käfigs vorzugsweise eine abgerundete Außenkontur mit Seitenflanken auf, welche in Richtung auf die jeweils zugehörige Seitenwand des Montageprofils divergieren. Zum einen ergibt sich hierdurch eine erhöhte Stabilität der Gesamtanordnung, zum anderen wird auch durch diese Maßnahme eine erhöhte Sicherheit gegen ein Verhaken von Frachtgut am Käfig erzielt.

Die Außenrollen sind vorzugsweise wesentlich schmaler als der Innenraum des Montageprofils bzw. eine gegebenenfalls dort montierte Innenrolle. Dadurch wird einerseits eine erhöhte Stabilität aufgrund kürzerer Achsenlänge erreicht, andererseits wird trotz dieser Maßnahme ein lediglich über eine Außenrolle geführter Container nicht überlastet, da er ja mit seinem Rand über die Außenrolle fährt, also mit einem Bereich, in welchem die üblichen Container oder Paletten verstärkt ausgebildet sind.

Besonders bevorzugt ist die Verwendung der erfindungsgemäßen Tragrolle in einem Montageprofil, das (insbesondere einzeln) in der Mitte des Frachtraumbodens eines Flugzeugs montiert, als Rollenbahn ausgebildet und mit Querriegeln versehen ist, zum Verriegeln von Paaren von Containern oder Paletten oder dergleichen Frachtstücken entlang der Mitte des Frachtraumbodens. Bei dieser Verwendung kann ein Montageprofil eingespart werden, was nicht nur hinsichtlich des Bauaufwandes, sondern insbesondere hinsichtlich der Gewichtseinsparung besonders vorteilhaft ist.

Bevorzugte Ausführungsformen der Erfindung ergeben sich aus den Unteransprüchen sowie der nachfolgenden Beschreibung von Ausführungsbeispielen, die anhand von Abbildungen näher erläutert werden. Hierbei zeigen
- - Fig. 1: eine Vorderansicht auf ein Montageprofil mit Rollen und Keilen von Containern,
- - Fig. 2: eine Ansicht entlang der Linie II-II aus Fig. 1,
- - Fig. 3: eine Ansicht entlang der Linie III-III aus Fig. 2,
- - Fig. 4: eine perspektivische Ansicht eines Montageprofils mit Tragrollen und Riegeln, und
- - Fig. 5: eine Draufsicht auf einen Abschnitt eines Frachtraumbodens.

In der nachfolgenden Beschreibung werden für gleiche und gleich wirkende Teile dieselben Bezugsziffern verwendet.

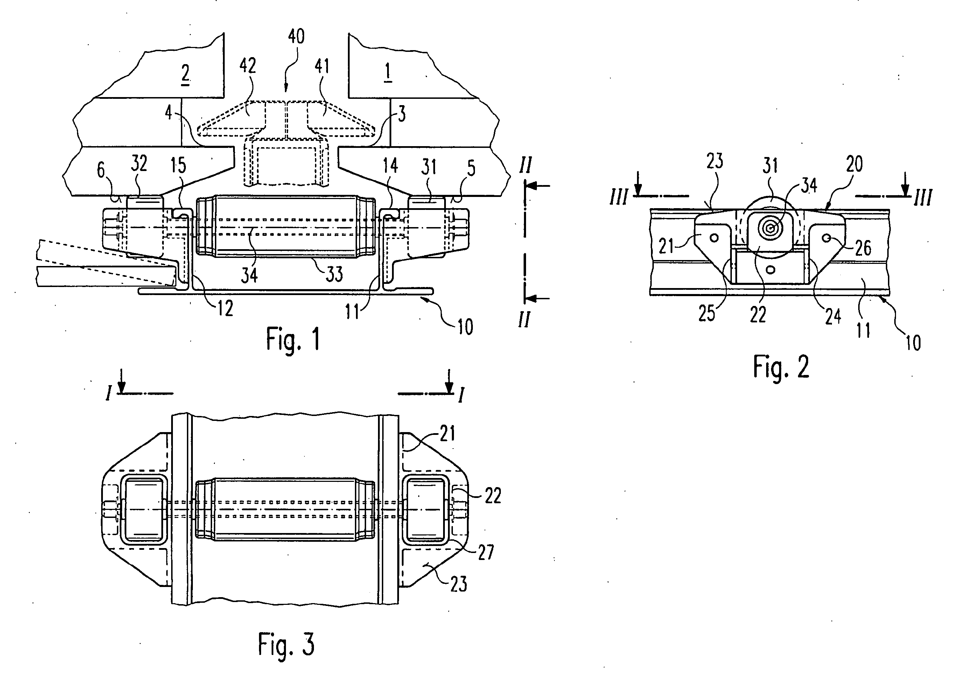

Wie in den Fig. 1 bis 4 gezeigt, weist ein Montageprofil 10 Seitenwände 11 und 12 auf, die von einem Boden 13 nach oben ragen. Oberränder 14 und 15 der Seitenwände 11 und 12 sind zur Erhöhung der Biegesteifigkeit nach außen "umgebördelt".

An den Seitenwänden 11, 12 und zwar an deren Außenflächen sind Käfige 20 mittels eines Flansches 21 montiert, der über Nieten 26 an den Seitenwänden 11, 12 befestigt ist. Der Käfig 20 weist weiterhin senkrecht zu den Seitenwänden 11, 12 des Montageprofils 10 vom Flansch 21 hervorstehende Seitenwangen 24, 25 sowie eine diese Seitenwangen 24, 25 verbindende Außenwand 22 auf, so dass sich ein geschlossener, biegesteifer Kasten ergibt. Die Oberränder der Außenwand 22 und der Seitenwangen 24, 25 gehen in eine obere Fläche 23 über, welche einen Ausschnitt 27 aufweist. Diese obere Fläche 23 ist einerseits zur Mitte hin ansteigend ausgebildet (siehe Fig. 2), andererseits weist sie einen Umfangsrand auf, der nach außen, vom Montageprofil 10 fortgerichtet konvergiert und an seinen Ecken abgerundet ist.

Durch die Seitenwände 11, 12, die Flansche 21 und die Außenwände 22 der beiden einander exakt gegenüberliegenden Käfige 20 ist eine Achse 34 hindurchgeführt und durch endseitige Sprengringe oder dergleichen gesichert. Auf der Achse 34 sind einerseits Außenrollen 31 und 32 und andererseits eine Innenrolle 33 drehbar angebracht, wobei die Außenrollen 31, 32 und die Innenrolle 33 identische Durchmesser besitzen und die Außenrollen 31, 32 durch die Ausschnitte 27 der Käfige 20 nach oben stehen.

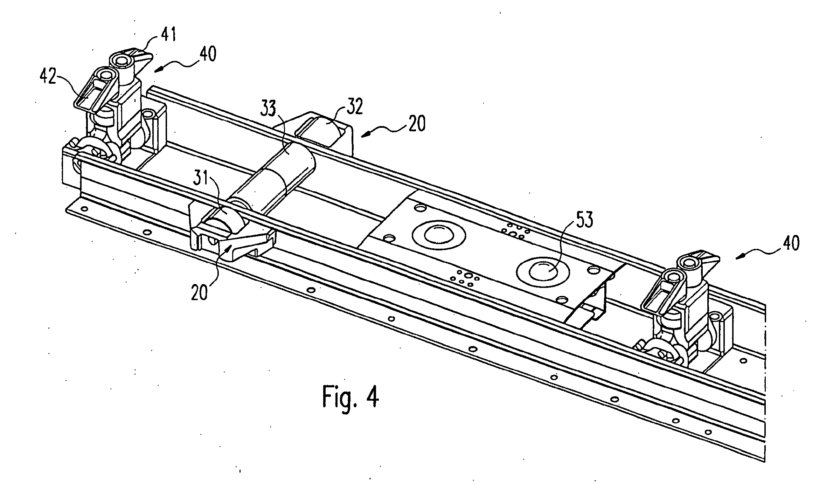

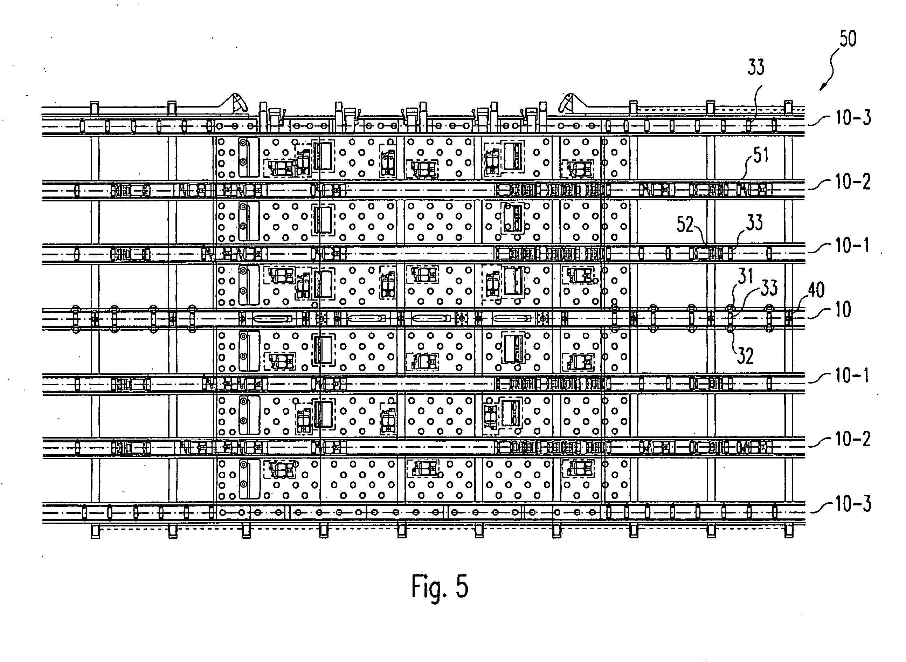

Wie in Fig. 5 gezeigt, sind auf einem Frachtraumboden 50 insgesamt 7 Montageprofile in Längsrichtung des Flugzeugs angebracht, nämlich ein mittleres Montagprofil 10, zwei randseitige Montageprofile 10-3 und dazwischen innere Montageprofile 10-1 und 10-2. In den inneren Montageprofilen 10-1 und 10-2 sind PDUs 51 und Riegel 52 montiert, welche Container gegenüber Kräften in Flugzeuglängsrichtung sichern. Darüber hinaus sind in allen Montageprofilen (Innen-) Rollen 33 und Kugelelemente 53 (siehe Fig. 4) angebracht, so dass sich Rollenbahnen ergeben.

Im mittleren Montageprofil 10, welches mit den Außenrollen 31, 32 versehen ist, sind Riegel 40 angebracht, welche zur Sicherung der Frachtstücke in Flugzeug-Querrichtung dienen. Wie in Fig. 1 und Fig. 4 angedeutet, weisen diese Riegel 40 Nasen 41, 42 auf, die nach den beiden Seiten gerichtet sind. Auf diese Weise können Container 1, 2 (siehe Fig. 1) mit ihren Verriegelungsrändern 3, 4 mittels des Riegels 40 bzw. dessen Nasen 41, 42 gesichert werden. Die Anordnung der Außenrollen 31, 32 ist hierbei derart, dass die Container 1, 2 mit ihren Randstreifen 5, 6 auf den Außenrollen 31, 32 (knapp) aufliegen, die Innenrolle 33 jedoch nicht berühren. Auf diese Weise können somit zwei nebeneinander liegende Container auf dem Frachtraumboden (siehe Fig. 4) mittels eines einzigen Montageprofils 10 und den dort befestigten Außenrollen 31, 32 sicher abgestützt werden. Dann, wenn ein Container mit höherer Breite in den Frachtraum eingeladen wird oder aus irgendwelchen Gründen ein schmalerer Container nicht randseitig sondern mehr in der Mitte transportiert wird, kommt die Innenrolle 33 zur Wirkung, die aufgrund ihrer hohen Breite einen solchen Container auch an seinem relativ weichen Boden abstützen kann. Die Außenrollen 31, 32 ergeben hierbei eine zusätzliche Abstützfläche.

Aus Obigem geht hervor, dass die Verwendung der hier beschriebenen Tragrollen nicht nur eine Einsparung an Aufwand bzw. Gewicht mit sich bringt, vielmehr wird auch durch die Anordnung der Riegel 40 innerhalb dieses mittleren Montageprofils gegenüber dem Stand der Technik ein erheblicher Vorteil erreicht.

### Bezugszeichenliste

- 1: 1. Container
- 2: 2. Container
- 3: Verriegelungsrand
- 4: Verriegelungsrand
- 5: Randstreifen
- 6: Randstreifen
- 10: Montageprofil
- 11: 1. Seitenwand
- 12: 2. Seitenwand
- 13: Boden
- 14: Oberrand
- 15: Oberrand
- 20: Käfig
- 21: Flansch
- 22: Außenwand
- 23: Obere Fläche
- 24: Seitenwange
- 25: Seitenwange
- 26: Niet
- 27: Ausschnitt
- 31: 1. Außenrolle
- 32: 2. Außenrolle
- 33: Innenrolle
- 34: Achse
- 40: Riegel
- 41: 1. Nase
- 42: 2. Nase
- 50: Frachtraumboden
- 51: PDU
- 52: Riegel
- 53: Kugelelement

## Patentansprüche

1. Montageprofil (10) zur Anbringung auf einem Frachtraumboden (50) eines Flugzeug-Laderaums, wobei das Montageprofil (10) Seitenwände (11, 12) aufweist und in einem Innenraum des Montageprofils (10) Riegelelemente (40) zum Sichern von Containern (1, 2), Paletten oder dergleichen Frachtstücken montierbar sind, wobei eine Tragrolle an dem Montageprofil (10) angebracht ist,
**dadurch gekennzeichnet, dass**
an einer durch die Seitenwände (11, 12) des Montageprofils (10) hindurchgeführten Achse (34) der Tragrolle zwei Außenrollen (31, 32) außerhalb des Innenraums des Montageprofils (10) derart drehbar montiert sind, dass nebeneinander liegende Container sicher abgestützt werden.

2. Montageprofil (10) nach Anspruch 1,
**dadurch gekennzeichnet, dass**
auf der Achse (34) im Innenraum des Montageprofils (10) eine Innenrolle (33) montiert ist.

3. Montageprofil (10) nach einem der vorhergehenden Ansprüche,
**dadurch gekennzeichnet, dass**
die Außenrollen (31, 32) jeweils in einem Tragekäfig (20) montiert sind, der einerseits an der zugehörigen Seitenwand (11, 12) des Montageprofils (10) befestigt ist und andererseits eine Außenwand (22) aufweist, in welcher die Achse (34) mit einem Endabschnitt unter Abstützung befestigt ist.

4. Montageprofil (10) nach Anspruch 3,
**dadurch gekennzeichnet, dass**
der Tragekäfig (20) eine obere Fläche (23) mit einer mittigen Ausnehmung (27) aufweist, durch welche die Außenrolle (31, 32) hervorragt.

5. Montageprofil (10) nach Anspruch 4,
**dadurch gekennzeichnet, dass**
die obere Fläche (23) zur Außenrolle (31, 32) hin ansteigend geneigt ausgebildet ist.

6. Montageprofil (10) nach einem der Ansprüche 4 oder 5,
**dadurch gekennzeichnet, dass**
die obere Fläche (23) eine abgerundete Außenkontur mit Seitenflanken aufweist, welche in Richtung auf die jeweils zugehörige Seitenwand (11, 12) des Montageprofils (10) divergieren.

7. Montageprofil (10) nach einem der vorhergehenden Ansprüche,
**dadurch gekennzeichnet, dass**
die Außenrollen (31, 32) wesentlich schmaler sind als der Innenraum des Montageprofils (10).

8. Verwendung eines Montageprofils (10) nach einem der vorhergehenden Ansprüche, das in der Mitte des Frachtraums (50) eines Flugzeugs montiert, als Rollenbahn ausgebildet und mit Querriegeln versehen ist zum Verriegeln von Paaren von Containern (1, 2) oder Paletten entlang der Mitte des Frachtraumbodens (50).

## Claims

1. Mounting profile (10) for attachment to a cargo hold floor (50) of an aircraft loading bay, wherein the mounting profile (10) has side walls (11, 12) and wherein locking elements (40) for securing containers (1, 2), pallets or similar items of cargo are mountable in an internal space of the mounting profile (10), a supporting roller being attached to the mounting profile (10),
**characterised in that**
two outer rollers (31, 32) are rotatably mounted outside the internal space of the mounting profile (10) on a shaft (34) of the supporting roller, which shaft passes through the side walls (11, 12) of the mounting profile (10), in such a way that containers located one next to the other are securely supported.

2. Mounting profile (10) according to claim 1,
**characterised in that**
an inner roller (33) is mounted on the shaft (34) in the internal space of the mounting profile (10).

3. Mounting profile (10) according to either one of the preceding claims, **characterised in that**
the outer rollers (31, 32) are each mounted in a support cage (20) which on one side is mounted on the associated side wall (11, 12) of the mounting profile (10) and on the other side has an outer wall (22) in which the shaft (34) is mounted, with support, by an end portion.

4. Mounting profile (10) according to claim 3,
**characterised in that**
the support cage (20) has an upper surface (23) having a central opening (27) through which the outer roller (31, 32) protrudes.

5. Mounting profile (10) according to claim 4,
**characterised in that**
the upper surface (23) slopes upwards towards the outer roller (31, 32).

6. Mounting profile (10) according to either one of claims 4 and 5, **characterised in that**
the upper surface (23) has a rounded outer shape with side flanks that diverge in the direction towards the respectively associated side walls (11, 12) of the mounting profile (10).

7. Mounting profile (10) according to any one of the preceding claims, **characterised in that**
the outer rollers (31, 32) are substantially narrower than the internal space of the mounting profile (10).

8. Use of a mounting profile (10) according to any one of the preceding claims, which mounting profile is mounted in the centre of the cargo hold (50) of an aircraft, is in the form of a roller conveyor and is provided with transverse locking elements for locking pairs of containers (1, 2) or pallets along the centre of the cargo hold floor (50).

## Revendications

1. Profilé d'assemblage (10) destiné à être monté sur le sol d'une soute cargo (50) d'un avion, le profilé d'assemblage (10) présentant des parois latérales (11, 12), et dans lequel des éléments de verrouillage (40) pour la fixation de containers (1, 2), de palettes ou de pièces de fret du même type sont assemblables dans une cavité intérieure du profilé d'assemblage (10), un rouleau de support étant monté sur le profilé d'assemblage (10),
**caractérisé en ce que** deux galets externes (31, 32) sont montés de manière pivotable de telle manière à l'extérieur de la cavité intérieure du profilé d'assemblage (10) sur un axe du rouleau de support traversant les parois latérales du profilé d'assemblage (10), que des containers situés à proximité les uns des autres puissent être maintenus fixement.

2. Profilé d'assemblage (10) selon la revendication 1, **caractérisé en ce qu'**un rouleau interne (33) est monté sur l'axe (34) de la cavité intérieure du profilé d'assemblage (10).

3. Profilé d'assemblage (10) selon l'une quelconque des revendications précédentes, **caractérisé en ce que** les galets externes (31, 32) sont systématiquement montés dans une cage de support (20), fixée d'un côté à la paroi latérale (11, 12) correspondante du profilé d'assemblage (10) et présentant de l'autre côté une paroi extérieure (22), dans laquelle est fixée l'axe (34) avec une terminaison de maintien.

4. Profilé d'assemblage (10) selon la revendication 3, **caractérisé en ce que** la cage de support (20) présente une face supérieure (23) avec un renfoncement central par lequel les galets externes (31, 32) dépassent.

5. Profilé d'assemblage (10) selon la revendication 4, **caractérisé en ce que** la face supérieure (23) est réalisée avec une pente inclinée vers le bas en direction des galets de support (31, 32).

6. Profilé d'assemblage (10) selon la revendication 4 ou 5, **caractérisé en ce que** la face supérieure (23) présente un contour extérieur arrondi avec des flancs latéraux, qui divergent dans la direction de la paroi latérale respectivement correspondante (11, 12) du profilé d'assemblage (10).

7. Profilé d'assemblage (10) selon l'une quelconque des revendications précédentes, **caractérisé en ce que** les galets externes (31, 32) sont considérablement plus étroits que la cavité intérieure du profilé d'assemblage (10).

8. Utilisation d'un profilé d'assemblage (10) selon l'une quelconque des revendications précédentes, qui est monté au centre de la soute cargo (50) d'un avion, agencé comme une piste à rouleaux et réalisé avec des traverses pour le verrouillage de paires de containers (1, 2) ou de palettes le long du centre du sol de la soute cargo (50).
